# EUROPEAN PATENT APPLICATION

(11) **EP 4 571 495 A1**
(43) Date of publication of application: **18.06.2025**
(21) Application number: 23217354.2
(22) Date of filing: 15.12.2023
(51) Int. Cl.: G06F 8/65, G06F 21/57, H04W 12/30

(54) **METHOD AND APPARATUS FOR UPDATING A SECURE ELEMENT OPERATING SYSTEM**

(71) Applicant: IDEMIA France, 92400 Courbevoie (FR)
(72) Inventor: MACUDA, Jacek, 92400 Courbevoie (FR); UGLIETTI, Gianni, 92400 Courbevoie (FR)
(74) Representative: Santarelli

(57) **Abstract**

The present invention concerns a method of updating a secure element operating system, OS, integrated in a device of an original equipment manufacturer, OEM, the secure element being manufactured by a secure element manufacturer, EUM, the method comprising: generating a secure element OS update; encapsulating the secure element OS update in a file; providing the file to the secure element; characterized in that: the file has the format of a Trusted Connectivity Alliance, TCA, package dedicated for mobile network operator, MNO, profile encapsulation; the file comprise indication indicating that it contains a secure element OS update; the file is provided to the secure element using mechanisms dedicated to MNO profile distribution; and that the method further comprises by the secure element: identifying the received file as a secure element OS update; and executing the secure element OS update.

## Description

### FIELD OF THE INVENTION

The present disclosure concerns a method and a device for updating the operating system of a secure element (discrete or integrated), such as eUICC (for embedded Universal Identity Circuit Card, also called eSIM, for embedded Subscriber Identity Module), eSE (for embedded Secure Element), ieUICC (for integrated eUICC) or iUICC (for integrated UICC). Within the scope of this disclosure words update, upgrade or patching are equivalent and used interchangeably.

### BACKGROUND OF INVENTION

A wireless user terminal, a smartphone, connected objects or any computer device with communication capabilities using a telecommunication network (e.g. mobile (phone) network, wireless network, radiocommunication network) is traditionally provided with a secure element (removable, embedded, discrete or integrated). Such secure elements comprises Universal Integrated Circuit Cards, UICC, as Subscriber Identity Modules, SIM, cards, and their embedded versions known as eUICC for embedded UICC or eSIM (for embedded SIM), their integrated versions known as iUICC (for integrated UICC) or ieUICC (for integrated eUICC). An eUICC module is a hardware secured element, generally of small size, which can be embedded or integrated in a communication device like a smartphone or TCU (for Telematics Control Unit used for connected vehicles) to provide the same functionalities of a traditional SIM card. eUICC are also integrated in many different communicating devices in the context of the so-called Internet of Things, IoT.

eUICC is typically manufactured by an eUICC manufacturer, EUM, to be provided to an Original Equipment Manufacturer, OEM, for integration in the devices produced by the OEM. In order to connect to and be able to communicate with a mobile network, a subscription is required with a Mobile Network Operator, MNO. All the parameters associated with the subscription are stored as a MNO profile in the eUICC. An eUICC may comprise several MNO profiles corresponding to different subscriptions with one or several MNOs.

eUICC are provided by the eUICC manufacturer with an operating system, OS, that implements the functionalities of the eUICC. These functionalities comprise the implementation of application protocol data unit, APDU, commands as specified in the standard ISO/IEC 7814 part 4, used for communicating with the eUICC. The operating system of the eUICC is not to be confused with the operating system that typically runs the device integrating the eUICC.

During the lifetime of the eUICC equipped device, which can be of several years up to ten to fifteen years, the technology evolves and the functionalities of the eUICC may require some update to keep running efficiently in their environment. The current approach for updating an eUICC operating system, both in IoT or consumer environment, comprises different operations. First, prior to the mass production of the device, the OEM integrates EUM specific software to be used for updating the eUICC operating system. This specific software is typically called OS update agent and runs on the device in the device operating system environment. This OS update agent is developed by the EUM and is dedicated to update the eUICC OS provided by this EUM by cooperating with corresponding update functionalities in the eUICC OS.

eUICC OS update packages are generated by the EUM and provided to the OEM. Then the OEM needs a firmware over the air, FOTA, platform to provide the update package for download. The targeted devices needing the update are triggered by the OEM for downloading the update package from the FOTA platform of the OEM. Once downloaded on the device, the OS update agent on the device handles the update package and realizes the update in cooperation with the eUICC.

This is a complex process requiring very close cooperation and integration between the EUM and the OEM. Moreover, some OEMs are not equipped with a FOTA platform. The delivery of the update package to the devices is a challenge as dedicated transport mechanisms needs to be implemented. Some modem specific requirements are enforced as the process requires specific non-standard APDUs.

### SUMMARY OF THE INVENTION

The present invention has been devised to address one or more of the foregoing concerns.

According to a first aspect of the invention there is provided a method of A method of updating a secure element operating system, OS, integrated in a device of an original equipment manufacturer, OEM, the secure element being manufactured by a secure element manufacturer, EUM, the method comprising :
- generating a secure element OS update;
- encapsulating the secure element OS update in a file;
- providing the file to the secure element;
characterized in that:
- the file has the format of a Trusted Connectivity Alliance, TCA, package dedicated for mobile network operator, MNO, profile encapsulation;
- the file comprise indication indicating that it contains a secure element OS update;
- the file is provided to the secure element using mechanisms dedicated to MNO profile distribution; and that the method further comprises by the secure element:
- identifying the received file as a secure element OS update; and
- executing the secure element OS update.

In an embodiment, the file is provided for download by the EUM on a platform normally dedicated for the download of MNO profiles.

In an embodiment, the EUM generates and transmits to the OEM a group activation code identifying the platform and the secure element OS update file.

In an embodiment, the group activation code is distributed by the OEM to the device for triggering the download of the file.

In an embodiment, the indication comprises a new ProfileClass value indicating that the profile is a secure element OS update.

In an embodiment, the indication comprises a new ProfileHeader flag indicating that the profile is a secure element OS update.

In an embodiment, the method further comprises:
- transmitting a notification indicating the success of the update from the device to the platform.

In an embodiment, the platform maintains a database of secure elements with the associated secure element OS version.

In an embodiment, the secure element, integrated or discrete, is one of an embedded Universal Identity Circuit Card, eUICC, an embedded Subscriber Identity Module, eSIM, an embedded Secure Element, eSE, an integrated eUICC, ieUICC, or an integrated UICC, iUICC.

According to another aspect of the invention there is provided a program for a programmable apparatus, the program comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible, non-transitory carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1a** illustrates the general architecture of embodiments of the invention dedicated to consumer products;
**Figure 1b** illustrates the general architecture of embodiments of the invention dedicated to IoT products;
**Figure 2** illustrates the main steps of a method for updating eUICC OS of a plurality of devices in embodiments of the invention;
**Figure 3** is a schematic block diagram of a computing device 300 for implementation of one or more embodiments of the invention.

### DETAILED DESCRIPTION OF THE INVENTION

The main idea of the described invention is to reuse the mechanisms dedicated to the installation of MNO profiles to provide an eUICC OS update mechanism. This implies to generate eUICC OS update packages under the form of a Trusted Connectivity Alliance (TCA) package, the format normally dedicated to encapsulate MNO profiles and standardized by the document "eUICC Profile Package: Interoperable Format Technical Specification, version 3.2, May 2022" (referenced as TCA standard for the rest of the text). A TCA package is a file conformant to the TCA standard as previously mentioned. These packages are provided for download using a SM-DP+ platform, a platform normally dedicated to make available MNO profiles for download. The download is activated by using group activation codes derived from the activation codes used to trigger a MNO profile download. Once downloaded, the eUICC OS recognizes the package as being an OS update package and not a standard MNO profile package and install the OS update in the eUICC. The process will be detailed in the following.

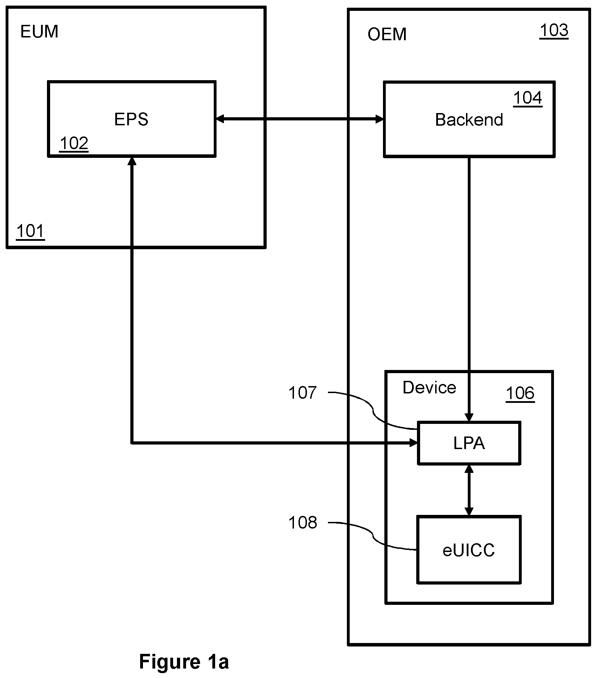

**Figure 1a** illustrates the general architecture of the described solution dedicated to consumer products.

The EUM is the manufacturer and provider of the eUICC. Frame 101 illustrates the EUM domain comprising an EPS (eSIM Patching Server) platform 102. The EPS platform is a platform used to make available eUICC OS update packages for download. It is based on the known SM-DP+ platform provided by EUM to MNOs (Mobile Network Operators) for handling the download of MNO profiles. The main difference is that EPS stays under control of EUM on behalf of OEM.

The EPS platform communicates with the backend platform 104 of the OEM domain 103. The backend platform 104 is used by the OEM to manage a fleet of devices 106 comprising a eUICC 108 for communication with a mobile network, not represented. In order to communicate with the mobile phone network, the device 106 requires a subscription to a mobile network operator, MNO. All the parameters associated with the subscription and required for connecting to the mobile network are stored in the eUICC as an MNO profile. MNO profiles may be replaced or upgraded on the eUICC 108. The download of MNO profiles is handled by a local Profile Assistant 107, LPA, which is a software module running in the device 106. The LPA 107 is responsible for the download of MNO profiles to be provided to the eUICC 108 for installation of new MNO profiles in the eUICC 108. The LPA 107 is also responsible into the management of the profile's states (e.g. enable, disable, delete, ...). These MNO profiles are made available for download by LPA 107 on a SM-DP+ platform, not represented, and managed by the MNO. The actual download of an MNO profile is triggered by the End User, not represented in the figures, who is the person using the device 106. The End User requests the download and installation of a profile by using an activation code, AC, and providing it to the device 106, and more precisely to the LPA 107. Alternatively LPA 107 may retrieve the activation code AC from an SM-DS server (SM-DS for "Subscription Management Discovery Service"). The SM-DS server is responsible for providing addresses of one or more SM-DP+ to the LPA. The activation code is delivered to the End User by MNO and it is composed of two parts. A first part is the address of the SM-DP+ platform under the form of a Fully Qualified Domain Name, FQDN, of the SM-DP+ platform. The second part is an unique identifier which refers to the MNO profile to be downloaded on the SM-DP+ platform. As MNO profiles comprises parameters associated with a subscription it comprises device and/or eUICC parameters and/or user personal parameters. As such, a specific MNO profiles must be generated for each user and may be linked with the specific eUICC embedded into the device.

In the context of eUICC OS update as herein described, under request of the OEM, the EUM generates an eUICC OS update package that is dedicated to a given version of eUICC OS. This package is not specific to a particular eUICC embedded into a device and may be downloaded by a plurality of devices comprising an eUICC with the same OS version. The eUICC OS update package is encapsulated in a TCA package. The format of the TCA package is adapted to include an information indicating that TCA package is actually an eUICC OS update package and not an MNO profile. In an embodiment, the OS update is encapsulated in a non-standard Profile Element, PE, in the TCA package. In order to allow the LPA 106 to identify the package as an OS update and not a regular MNO profile, it is proposed to introduce a new type in the metadata defined in the SGP.22 standard. "metadata" as to be understood as being a data or a structure of data which represents and/or describes in a kind of abstract aspect a feature, another value or other values whatever the support, the implementation or the realization of them. For example, the types specified by the standard may become (using of ASN.1 (for "Abstract Syntax Notation One") notation): ProfileClass ::= INTEGER (test(Q), provisioning(1), operational(2),osupdate(3)}

Where the new type osupdate(3) value has been introduced to indicate that the package comprises an eUICC OS update.

In some embodiments, metadata associated with the profile may contain additional data describing the OS update. For example, the serviceProvideName field may identify the EUM providing the OS update. The profileName field may be used also to provide an identifier of the OS update, for example by comprising an OSUpdateProfileVersionID value.

A new NotificationEvent value may also be defined to notify the new OS update type of operation or execution. Linked to this new NotificationEvent, new NotificationEventStatus values may be defined and as for instance based on the standard ones actually already defined values into the SGP.22 standard. These new values could be "Executed-Success" and/or "Failed".

A new notification Configuration Info value may also be introduced.

In an embodiment, the syntax of metadata are amended as follows, where the amendments introduced according to this disclosure appears in bold police:

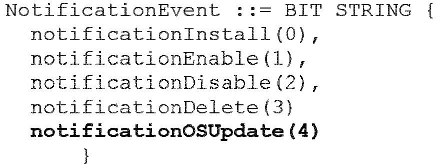

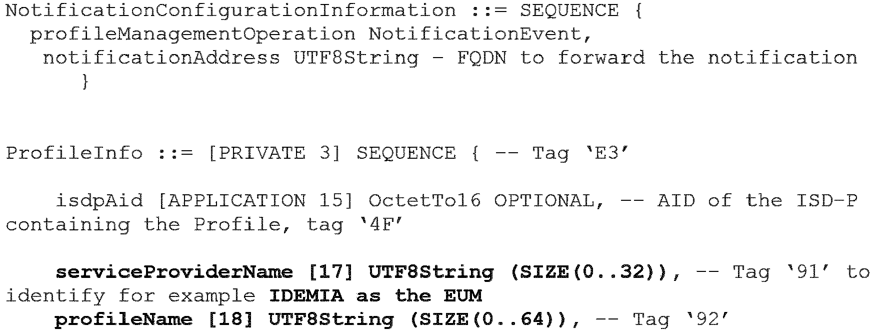

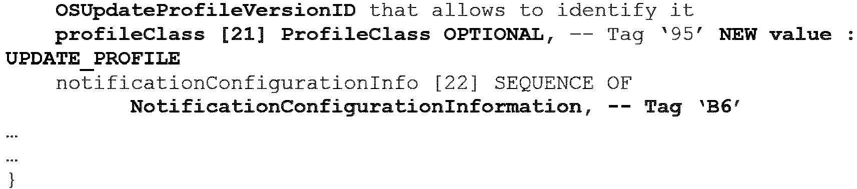

Optionally, the profile header defined by the TCA standard may be amended as follows:

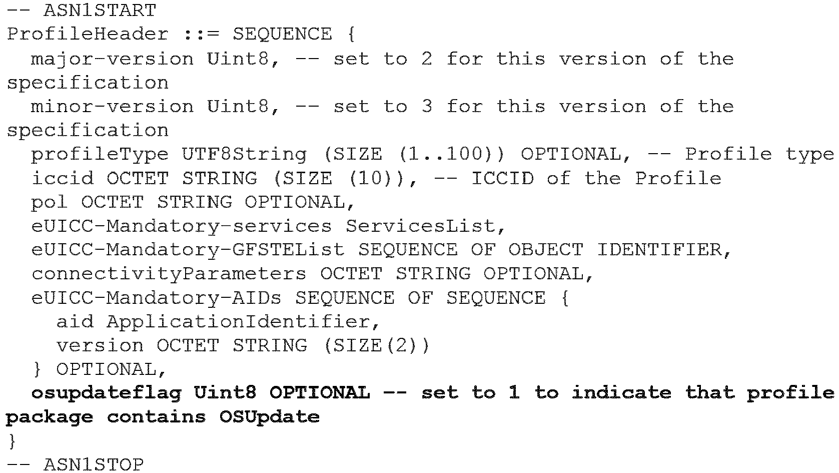

When set to the value 1, the osupdateflag signals that the package comprises an eUICC OS update. Accordingly, when the eUICC will search for an non-standard profile element, PE, encapsulating the binary code of the OS update in the package. Accordingly, the list of profile elements admitted in a package is enriched with a PE-NonStantard value for identifying such non-standard profile element. For example as illustrated below:

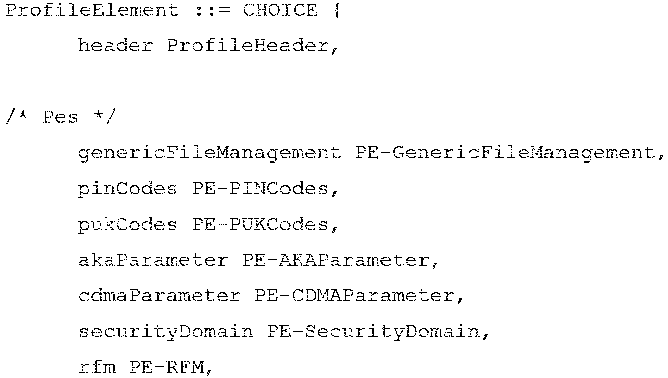

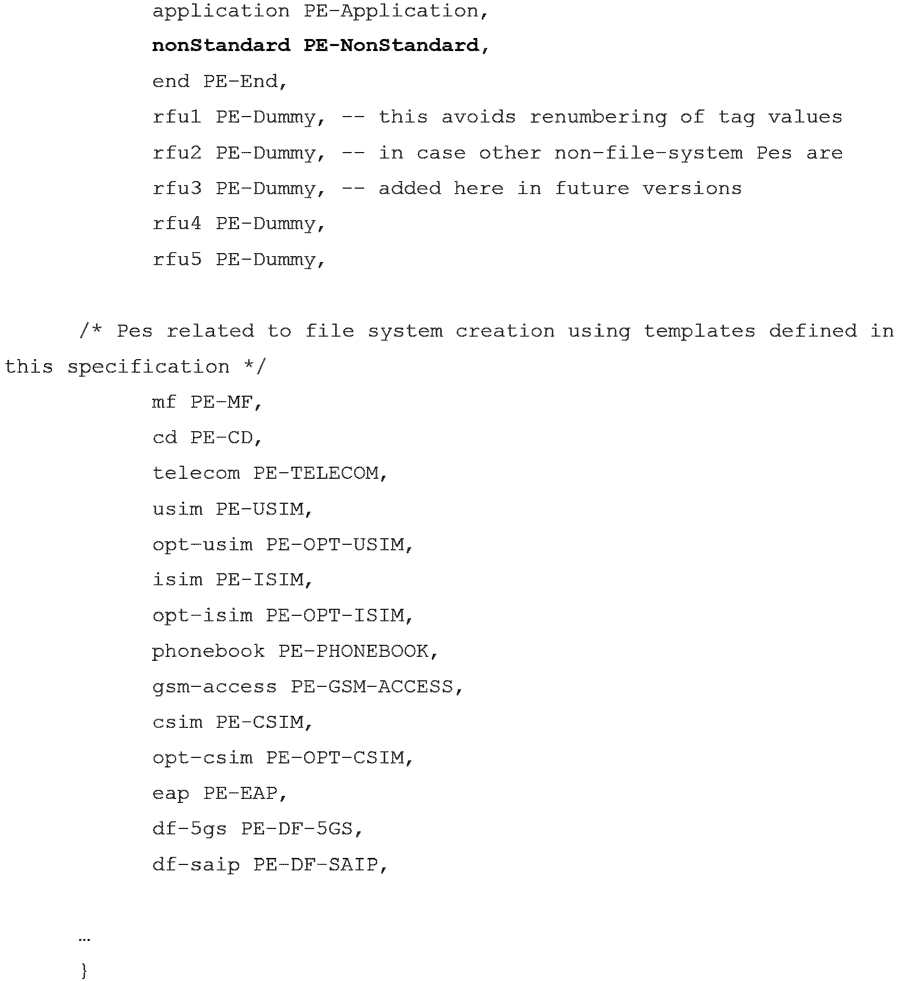

When the package comprising the OS update has been transmitted to the eUICC 108 by the LPA 107, the update is applied by the eUICC. Applying the OS update may require the eUICC OS to reboot for completion.

Once the update of the eUICC OS has been completed, this is notified by the eUICC 108 to the LPA 107, which itself notifies the update result (success or failure of the update operation) to the EPS 102.

Advantageously, the EPS 102 keeps up to date a database of all the deployed eUICC with the version of OS they are running. This database is first initialized using the initial OS version of the deployed eUICC. Then, the reception of the notification of a successful update of the OS by the EPS platform allows the database to be updated with the current values.

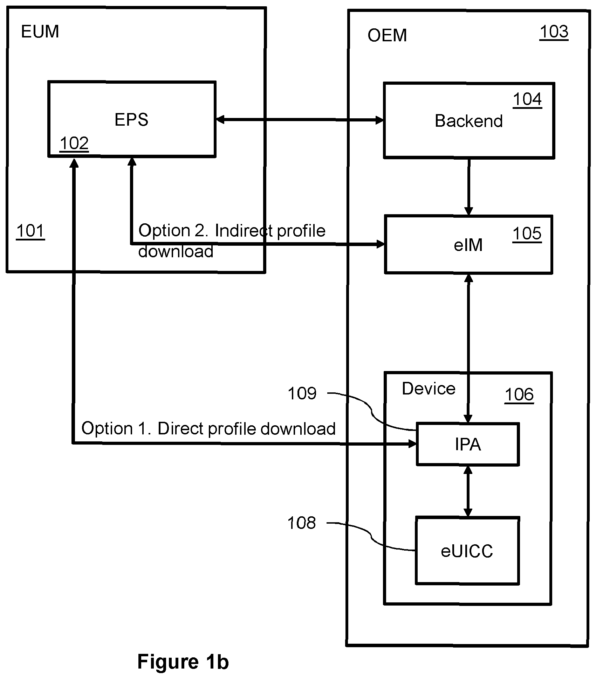

**Figure 1b** illustrates a similar process in the context of IoT (Internet of Thing) environment. In this context, devices 106 are no longer consumer devices but IoT devices. An IoT device is typically a communicating device implied in a Machine to Machine communication. The process is very similar to the one described in relation with Figure 1a with the difference that OEMs typically use an elM (eSIM loT Remote Manager) module 105 in charge of managing eUICC deployed in IoT devices 106. The elM is responsible for remote Profile State Management Operations (PSMOs) on a single IoT Device or a fleet of IoT Devices. The LPA agent 107 in the consumer device is replaced by an IoT Profile Agent 109, IPA, with the same functionality dedicated to the installation of MNO profiles in the eUICC integrated in the IoT device 106 and also responsible into the management of the profile's states (e.g. enable, disable, delete, ...).

Communication between the elM module 105 and the IPA agent 109 is standardized by standard document GSMA SGP.32 "eSIM IoT Technical Specification, Version 1.0.1, 04 July 2023". According to the prior art, it is not possible for the elM module 105 to retrieve and push an eUICC OS update package to the eUICC. According to embodiments, in order to receive the group activation code GAC for downloading an eUICC OS update package, the IPA 109 sends a standardized GetEimPackageRequest message which contains at least the identifier of the eUICC (i.e. EID for eUICC IDentifier) for which the elM Package is requested and shall be retrieved to the elM module 105. In response, the IPA 109 receives a GetEimPackageResponse and retrieves inside, a new non-standard output data among the other current standardized output data, and which may be identified according to a new output data name OSUpdateDownloadTriggerRequest:

| **Output data name** | **Description** | **Type** | **No.** | **MOC** |
|---|---|---|---|---|
| EuiccPackageRequest | The eUICC Package Request | Binary | 1 | C⁽¹⁾ |
| IpaEuiccDataRequest | The request for IPA and/or eUICC data | Binary | 1 | C⁽¹⁾ |
| ProfileDownloadTriggerReque st | The request for IPA to trigger profile download | Binary | 1 | C⁽¹⁾ |
| **OSUpdateDownloadTriggerRequ est** | **The request for IPA to trigger OSUpdate download via EPS** | **Binary** | **1** | **C⁽¹⁾** |

| | | | | |
|---|---|---|---|---|
| ⁽¹⁾ : Either one and only one of EuiccPackageRequest, IpaEuiccDataRequest, ProfileDownloadTriggerRequest or OSUpdateDownloadTriggerRequest can be present. | | | | |

### MOC : Mandatory, Optionnal or Conditional

This new GetEimPackageResponse may also be introduced as follows:

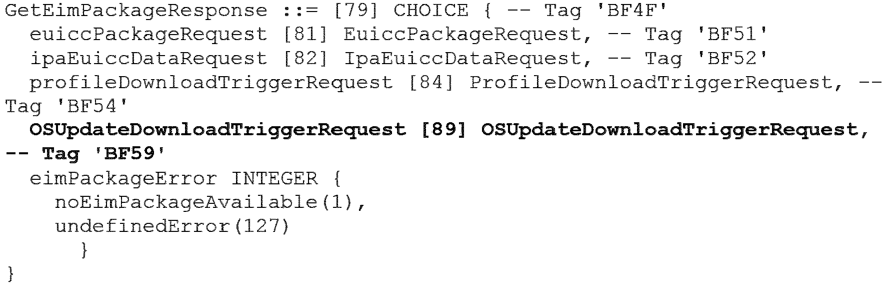

OSUpdateDownloadTriggerRequest is used by elM module 105 to notify the IPA 109 that there is a pending OSUpdate package awaiting retrieval on EPS platform 102. It is preferred to be used instead of ProfileDownloadTriggerRequest (both play similar role) as some devices may require entering into maintenance mode prior updating of eUICC OS, eg. to avoid update during critical device operations.

Download eUICC OS update package can be either executed in the same manner like for Consumer products (Option 1 in Figure 1b : Direct profile download, between IPA 109 and EPS 102) or for network and resource constraint devices following indirect profile download (Option 2 in Figure 1b, between IPA 109, elM 105 and EPS 102.

A new tag may also be introduced to notify the elM module 105 that the eUICC OS update has been executed. In an embodiment, the tag may take the following form:

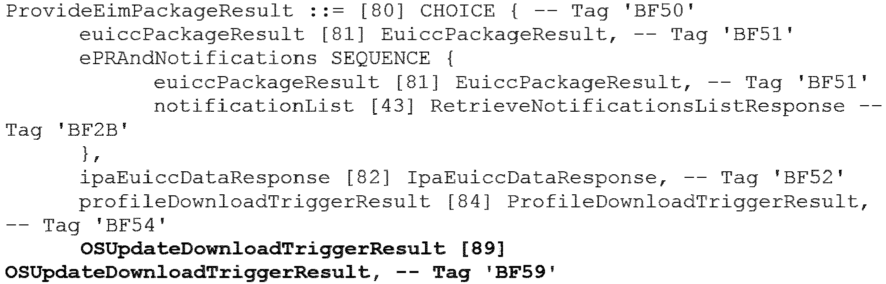

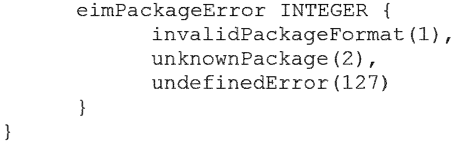

Once notified the eIM may send a corresponding notification to the OEM backend. 104.

In both environment, consumer or IoT, the EPS platform 102 may advantageously match the received eUICC identifier in the request for package to verify the eligibility of the eUICC for OS update. This is particularly useful in case the EPS platform 102 is used with multiple OEMs to manage their eUICC OS update.

Advantageously, the EPS platform 102 generates an update report to the OEM to report the eUICC identifier that have been updated. This allows the OEM to manage their fleet of devices.

Advantageously, the eUICC keeps in memory a record of all updates and an identifier of the current version of its OS. For example, EUICCInfo2 euiccFirmwarever field is updated with the value corresponding to the last update installed in the eUICC.

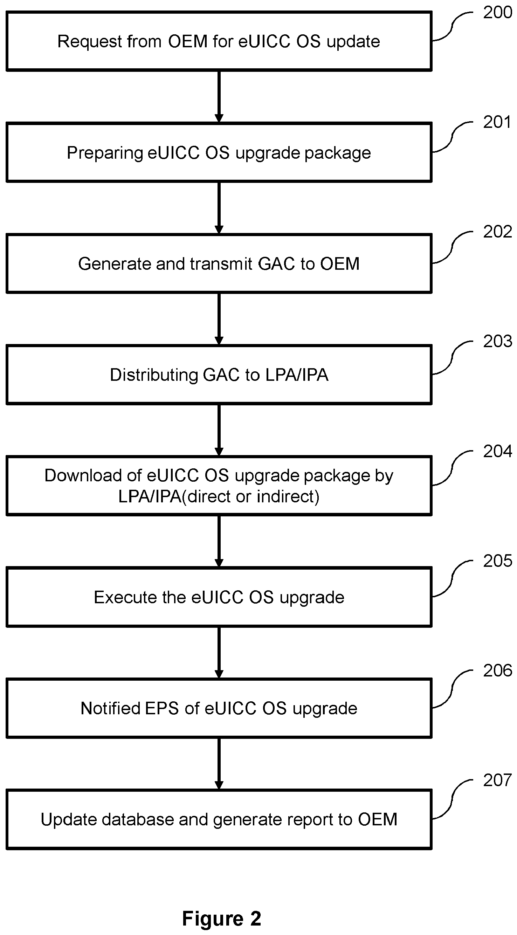

**Figure 2** illustrates the main steps of a method for updating eUICC OS of a plurality of devices in embodiments of the invention. Some of the described steps may be optional and not mandatory in all embodiments of the invention.

Typically, the process is initiated by the OEM managing a fleet of devices provided with an eUICC for communication with a mobile network. Alternatively, the process may be initiated by the EUM to push an eUICC OS update to eUICC. In this latter case, step 200 is not executed.

In a first step 200, the OEM sends a request of eUICC OS update to the EUM. This request typically comprises the current version of the eUICC OS that needs to be updated. Optionally, the request may comprise the eUICC identifiers (eID) of all the targeted eUICCs embedded in the OEM devices. This allows the EUM to check the eligibility of the eUICCs to the update based on its database of all the deployed eUICCs associated with their OS version.

In a step 201, the EUM generates the eUICC OS update package as described in relation with figures 1a and 1b. Once generated, the eUICC OS update package is made available for download on the EPS platform of the EUM. The eUICC OS update package corresponds to a TCA profile package modified to comprise an information indicating that the package actually comprise an eUICC OS update and not a regular MNO profile.

In a step 202, the EUM generates a group activation code, GAC, that identifies the EPS platform, typically using a fully qualified domain name, and that identifies the eUICC OS update package. This group activation code will allow the LPA/IPA to generate the right request to the EPS platform for the actual download of the package. This GAC is unique and can be used by all the devices comprising an eUICC that need to be updated. This is different from regular activation code used for the download of regular MNO profiles that must be personalized for each device/eUICC. This GAC is then transmitted to the OEM. Advantageously GAC allows broadcasting the OS Update campaign on all targeted devices.

In a step 203, the OEM distributes the GAC to all the targeted devices. This distribution may be done directly in the consumer context or using the eIM module in the IoT context. The GAC is received in the devices by the LPA/IPA agent in charge of handling the MNO profiles of the eUICC.

In a step 204, the LPA/IPA agent in the device generates a request for downloading the package. The request is sent to the EPS platform identified in the GAC for the download of the package identified in the GAC. In embodiments, the request is sent from the IPA agent to the ESM platform throw the elM module 105. Advantageously, the request comprises the eUICC identifier. This allows the EPS platform to check the eligibility of the eUICC to the update based on its database of all eUICC deployed by the EUM along with their current OS version. In response to this request, and in case of eligibility if it is checked, the LPA/IPA agent of the devices receives the requested eUICC OS update package.

In a step 205, the LPA/IPA agent of the device transmits the package to the eUICC. The eUICC OS recognizes the package as an OS update and executes the update. The result of the OS update is notified to the LPA/IPA agent once executed.

In a step 206, the notification of OS update result is sent back to the EPS platform directly or throw the elM module 105.

In a step 207, the EPS platform updates its database storing the deployed eUICC with the new version of the OS of the updated eUICC based on the received notifications. Advantageously, the EPS platform generates a report of all updated eUICC to be transmitted to the OEM.

By encapsulating an eUICC OS update in a MNO profile package provided with an information indicating that the content of the package is an OS update and not an MNO profile, it is possible to use the MNO profile download mechanisms for updating the OS of an eUICC. This method is simpler and more effective than known method of the prior art. It reuses existing and trusted ecosystem without significant impact on device architecture.

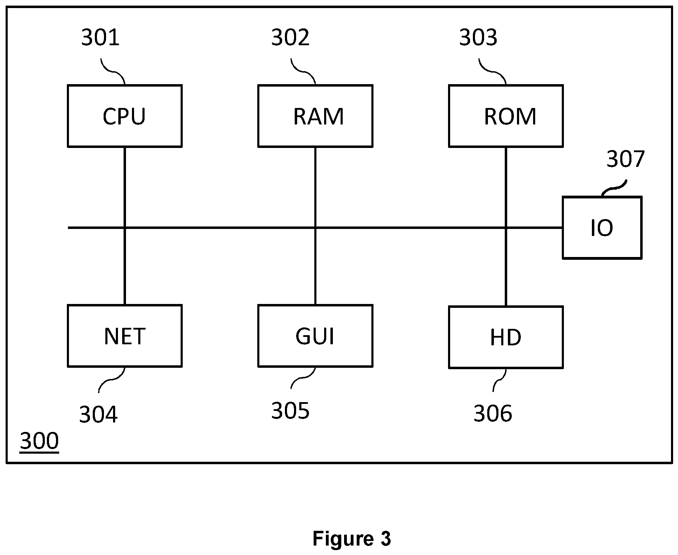

**Figure 3** is a schematic block diagram of a computing device 300 for implementation of one or more embodiments of the invention. The computing device 300 may be a device such as a micro-computer, a workstation or a light portable device. The computing device 300 comprises a communication bus connected to:
- a central processing unit 301, such as a microprocessor, denoted CPU;
- a random access memory 302, denoted RAM, for storing the executable code of the method of embodiments of the invention as well as the registers adapted to record variables and parameters necessary for implementing the method according to embodiments of the invention, the memory capacity thereof can be expanded by an optional RAM connected to an expansion port for example;
- a read only memory 303, denoted ROM, for storing computer programs for implementing embodiments of the invention;
- a network interface 304 is typically connected to a communication network over which digital data to be processed are transmitted or received. The network interface 304 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU 301;
- a graphical user interface 305 may be used for receiving inputs from a user or to display information to a user;
- a hard disk 306 denoted HD may be provided as a mass storage device;
- an I/O module 307 may be used for receiving/sending data from/to external devices such as a video source or display.

The executable code may be stored either in read only memory 303, on the hard disk 306 or on a removable digital medium such as for example a disk. According to a variant, the executable code of the programs can be received by means of a communication network, via the network interface 304, in order to be stored in one of the storage means of the communication device 300, such as the hard disk 306, before being executed.

The central processing unit 301 is adapted to control and direct the execution of the instructions or portions of software code of the program or programs according to embodiments of the invention, which instructions are stored in one of the aforementioned storage means. After powering on, the CPU 301 is capable of executing instructions from main RAM memory 302 relating to a software application after those instructions have been loaded from the program ROM 303 or the hard-disc (HD) 306 for example. Such a software application, when executed by the CPU 301, causes the steps of the flowcharts of the invention to be performed.

Any step of the algorithms of the invention may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of updating a secure element operating system, OS, integrated in a device of an original equipment manufacturer, OEM, the secure element being manufactured by a secure element manufacturer, EUM, the method comprising :
- generating a secure element OS update;
- encapsulating the secure element OS update in a file;
- providing the file to the secure element;
**characterized in that**:
- the file has the format of a Trusted Connectivity Alliance, TCA, package dedicated for mobile network operator, MNO, profile encapsulation;
- the file comprise indication indicating that it contains a secure element OS update;
- the file is provided to the secure element using mechanisms dedicated to MNO profile distribution; and that the method further comprises by the secure element:
- identifying the received file as a secure element OS update; and
- executing the secure element OS update.

2. The method of claim 1, wherein the file is provided for download by the EUM on a platform normally dedicated for the download of MNO profiles.

3. The method of claim 2, wherein the EUM generates and transmits to the OEM a group activation code identifying the platform and the secure element OS update file.

4. The method of claim 3, wherein the group activation code is distributed by the OEM to the device for triggering the download of the file.

5. The method of any preceding claims, wherein the indication comprises a new ProfileClass value indicating that the profile is a secure element OS update.

6. The method of any preceding claims, wherein the indication comprises a new ProfileHeader flag indicating that the profile is a secure element OS update.

7. The method of any preceding claims, wherein the method further comprises:
- transmitting a notification indicating the success of the update from the device to the platform.

8. The method of claim 7, wherein the platform maintains a database of secure elements with the associated secure element OS version.

9. The method of any one claim 1 to 8, wherein the secure element, integrated or discrete, is one of an embedded Universal Identity Circuit Card, eUICC, an embedded Subscriber Identity Module, eSIM, an embedded Secure Element, eSE, an integrated eUICC, ieUICC, or an integrated UICC, iUICC.

10. A program for a programmable apparatus, the program comprising a sequence of instructions for implementing a method according to any one claim 1 to 9, when loaded into and executed by the programmable apparatus.

11. A computer-readable storage medium storing instructions of a computer program for implementing a method according to any one of claims 1 to 9.
